Europäisches Patentamt

European Patent Office

Office européen des brevets

(11) Publication number: **0 205 696**
**B1**

(12) **EUROPEAN PATENT SPECIFICATION**

(45) Date of publication of patent specification: **31.05.89**

(21) Application number: **85304504.5**

(22) Date of filing: **25.06.85**

(51) Int. Cl.⁴: **F 16 L 41/06**

(54) **Branch pipe fittings.**

(43) Date of publication of application:
**30.12.86 Bulletin 86/52**

(45) Publication of the grant of the patent:
**31.05.89 Bulletin 89/22**

(84) Designated Contracting States:
**AT BE CH DE FR GB IT LI LU NL SE**

(56) References cited:
**DE-C- 305 067**
**DE-C-1 212 796**
**FR-A-2 231 915**
**US-A-2 736 335**
**US-A-3 293 952**
**US-A-3 847 501**

(73) Proprietor: **TOKYO GAS CO., LTD.**
**5-20, Kaigan 1-chome**
**Minato-ku Tokyo (JP)**

(72) Inventor: **Kosaka, Etsuji**
**3-3, Shiomidai Isogo-Ku**
**Yokohama-Shi Kanagawa-ken (JP)**

(74) Representative: **King, James Bertram**
**Herbert J.W. Wildbore 73 Farringdon Road**
**London EC1M 3JB (GB)**

Courier Press, Leamington Spa, England.

## Description

This invention relates to a clamping device for use in connecting a branch pipe to a main pipe which may be buried underground and used for conveying gas or water.

In connecting a branch pipe to a main pipe a branch coupling is fitted to a connection section of the main pipe. Usually such a connection method for a cast iron gas main uses a threaded hole and the branch coupling is screwed directly into the hole to make the connection.

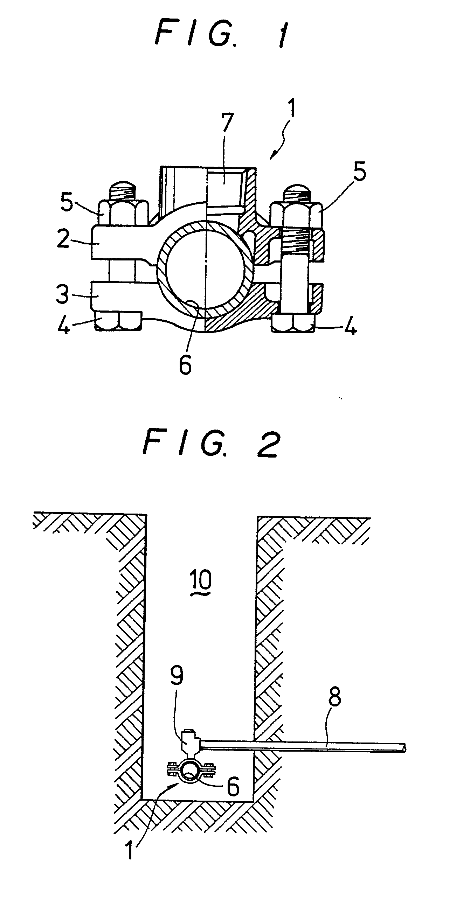

However, if the main pipe is made of steel, then it is thinner and hence to join the branched coupling directly to it, as in the case of the cast pipe, is a problem due to the reduced strength. For this reason, a clamping device of the construction as shown in Figure 1 is used. This clamping device has two split structures comprising an upper shell 2 with a sealing member and a lower shell 3 secured by bolts 4 and nuts 5. The connection of the branched pipe using this clamping device is effected by sinking a shaft 10 into the ground to expose the gas main pipe 6 as illustrated in Figure 2. An operator then enters the vertical hole 10, places the upper shell 2 on the gas main pipe 6, applies the lower shell 3 to the lower face, secures both the components with bolts 4 and nuts 5, connects the branch coupling 9 to the connection port 7 and then further connects the branch pipe 8 to the branch coupling 9.

In the connection of a branch pipe using the conventional clamping device as seen from the aforesaid example, one person at least must enter into the shaft to perform the work. Disadvantages are as follows:—

a) The shaft must be excavated.

b) The shaft must be infilled and, in the case of a paved street, a large repair remains evident on the surface.

c) If space is not available to sink a shaft large enough to accommodate a person then a branch pipe must be extended to a location where the said space is available.

An object of this invention is to provide a clamping device wherein all operations can be carried out from ground level, without entering the shaft in order to secure the clamp.

According to this invention there is provided an apparatus as disclosed in claim 1.

In use the clamping device is fitted to the end of a rod-shaped tool with the arms in a slackened state and then lowered into the vertical shaft. The arms of the clamping device embrace the main pipe. When the clamping device has been set on the main pipe a wrench is lowered, for instance, to clamp and tighten the bolts. In this way, the ends of the arms are pushed to embrace the pipe. By this holding action, the arms can grip the main pipe to secure the clamping device to the main pipe. When secured, the wrench is detached and a branched coupling is lowered onto the connection port of the main body from ground level using the same tool to connect the branched coupling to the connection port of the clamping device. When the connection of the branched coupling has been effected, in order to connect the branched pipe to this branched coupling, a drilling apparatus is lowered to the branched coupling, and a hole cutting saw is lowered onto the main pipe. Through the branched coupling a drilling operation is performed to drill a hole in the main pipe. Once the hole has been drilled in the main pipe, the fluid inside the main pipe enters the branched coupling through the hole and flows toward the branched pipe. The drill is withdrawn after the drilling operation and a plug screwed into the top aperture of the branched coupling to close-off same.

After connecting the branched pipe as mentioned above, the excavation is back-filled to end the repair work.

This invention also provides a method of fitting a branch pipe to a main pipe as disclosed in claim 8.

The invention is further described and illustrated with reference to the accompanying drawings showing an embodiment and also describing the method of operation; in the drawings:—

Figure 1 shows a part sectional view of a known clamping device,

Figure 2 shows the method of connection using the known clamping device,

Figure 3 shows a perspective view of a clamping device of this invention,

Figure 4 shows a side view of a clamping device as shown in Figure 3,

Figures 5 to 8 show views of the working method for connecting the clamping device of this invention,

Figure 9 shows a side view of a tool for lowering the clamping device into the shaft,

Figure 10 shows a side view of a branched coupling,

Figure 11 shows a part section of a clamping device with the arms open,

Figure 12 shows a plan view of a clamping device as shown in Figure 11,

Figure 13 shows a sectional view with the arms embracing and secured to a gas main,

Figure 14 shows a side view of the clamping device of Figure 13,

Figure 15 shows a front view of an elastic resilient member,

Figure 16 shows a side view of the elastic member, and

Figure 17 shows a perspective view of a further elastic resilient member.

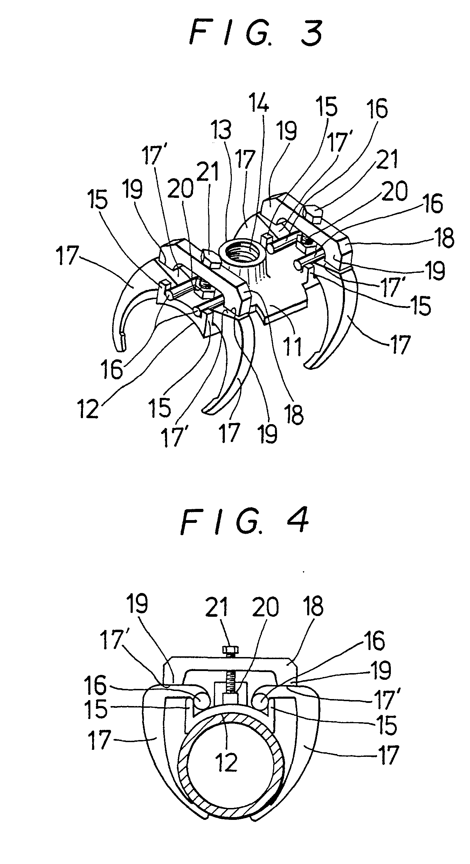

The clamping device which enables this invention to be put into practice is shown in Figure 3 and Figure 4.

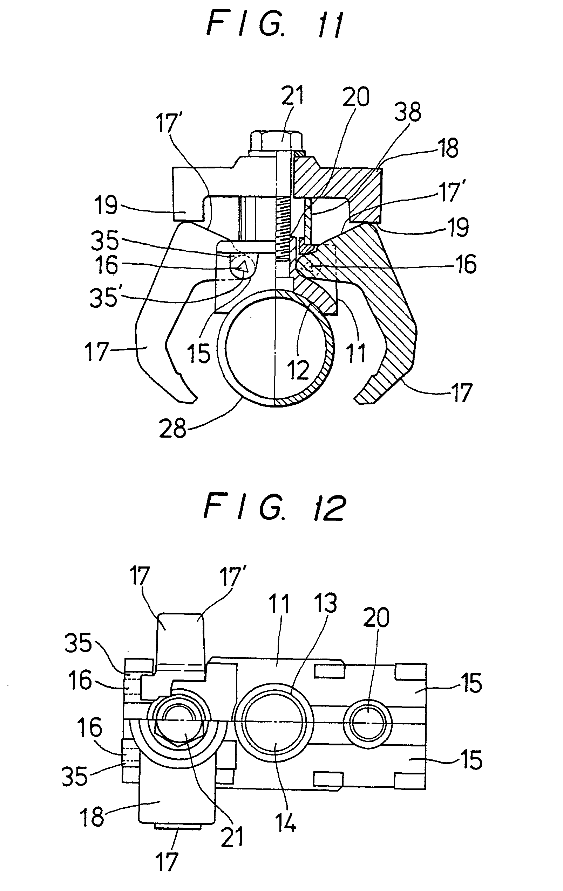

In these figures 11 is the clamping device main body, 12 a curved surface formed on the lower side of clamping device main body 11 for embracing the main pipe, 13 the connection port for the branched coupling and provided in the centre of main body 11 with screw thread 14 inside the connection port 13. Around the circumference of connection port 13 on the curved face 12 is an O-ring of sealing material which is fitted to improve the sealing property against the main pipe 28.

The upper surface of main body 11 has protruding support sections 15 formed on both sides of the connection port 13. Rotary pivot shafts 16 are located on the aforesaid support sections and the shafts are integral with right and left arc-shaped arms 17. The arms 17 can be rotated freely about the rotary shafts 16 which form pivot centres.

Arm retainers 18 have abutments 19 engaging the shoulder sections 17' of arms 17 and are supported by bolts 21 screwed into the thread holes 20 provided between the right and left arms 17 forming a pair.

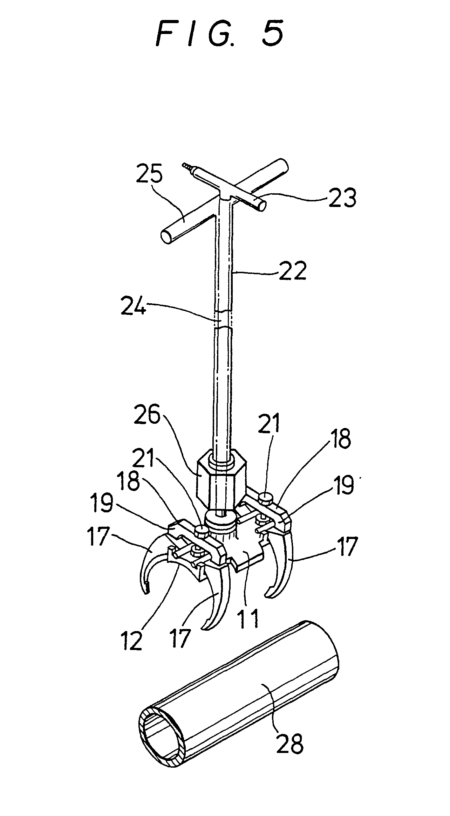

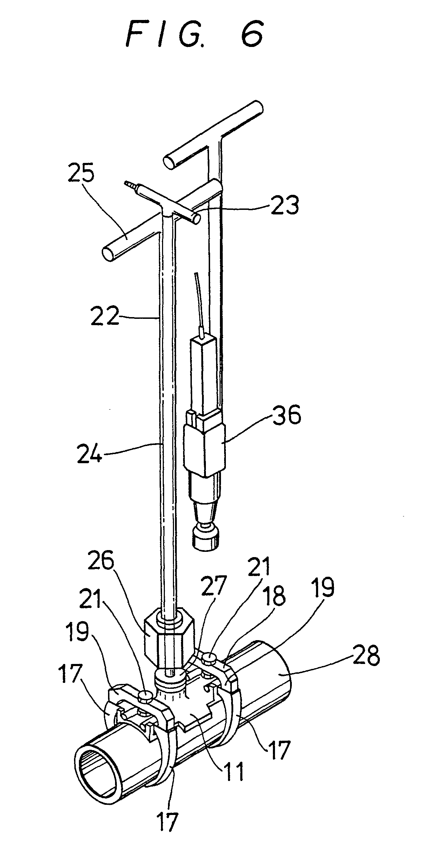

Figures 5 to 8 show the means for fitting the clamping device to the gas main pipe.

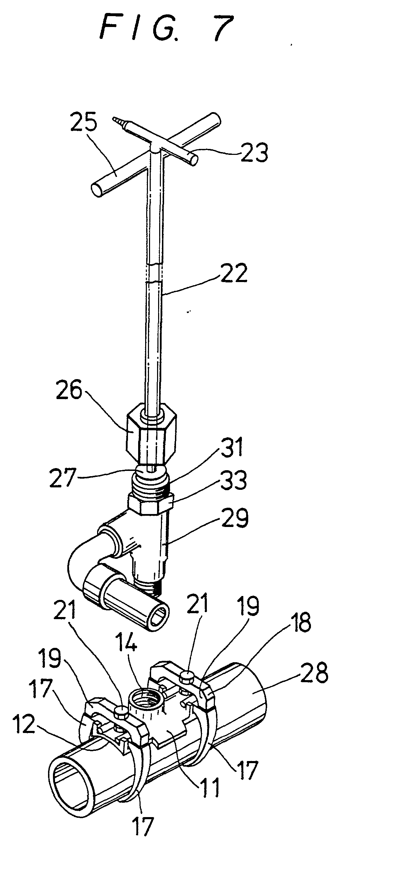

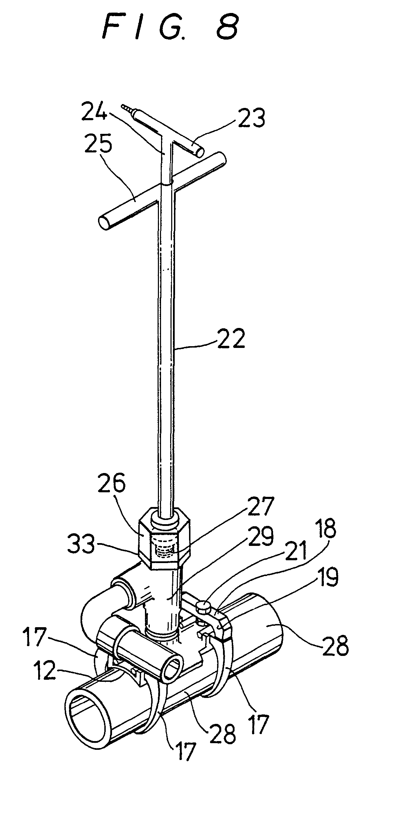

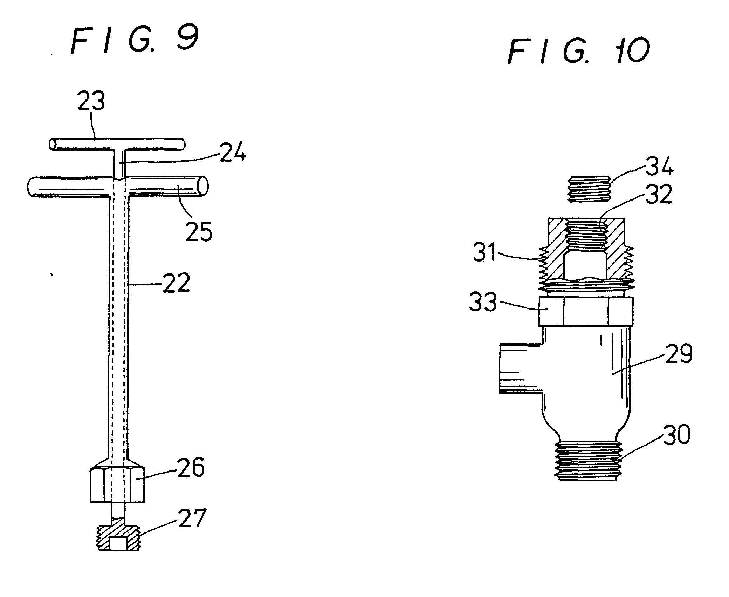

Firstly, the threaded portion 27 of the tool shown in Figure 9 is screwed into the connection port 13 of the main body 11 to engage the clamping device using the end of said tool which is lowered into the vertical hole as shown in Figure 5. At this time the arms 17 are free. The clamping device is lowered and placed on to the gas main pipe 28 when the arms 17 are open using the handle 23 and by manipulating with the tool 22 when connected with the port 13 of the main body. A wrench is lowered from ground level to tighten the bolts 21. When the bolts 21 are tightened in this way, the shoulder portions 17' of arms 17 are pushed down by the parts 19 of arm retainers 18. As a result, the arms 17 rotate about shafts 16 to embrace the sides of pipe 28 and hold same. The clamping device is thus secured to the main pipe 28. When the clamping device is secured to the main pipe, the tool is removed from the connection port 13 of the clamping device and lifted out to ground level. The threaded portion 27 is then screwed into the upper port 32 of branched coupling 29 as shown in Figure 10 to hold the branched coupling 29, this is then lowered into the vertical hole as illustrated in Figure 7, and secured using handle 23 as shown in Figure 8. The cap nut 26 is fitted to the hexagonal section 33 of branched coupling 29 by rotating handle 25 to screw the threaded portion 30 of branched coupling 29 into the thread 14 provided inside the connection port 13 of main body 11 to install the branched coupling 29 on to the clamping device as illustrated in Figure 8. When the aforesaid installation is complete the branched pipe is connected to the port on the elbow piece which has previously been connected with the branched coupling 29. The tool is detached from the branched coupling and then drilling apparatus 36 is lowered and installed on the upper port 32 of branched coupling 29. The gas main pipe 28 is then drilled and the drilling machine detached from the branched coupling and plug 34 is screwed into the upper port 32 of branched coupling 28 to close it. The excavation is then back-filled to end.the work.

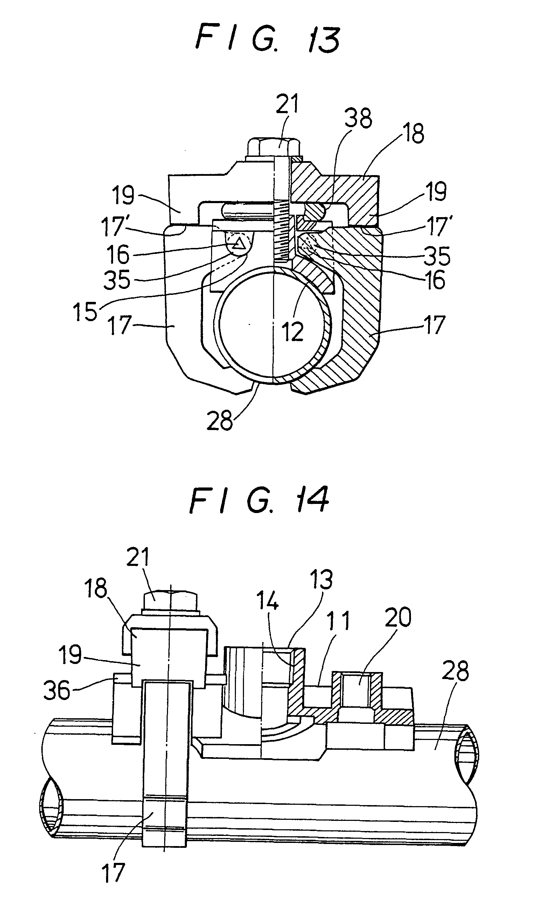

Figure 11 to Figure 17 shows a practical example. If the arms 17 are loose, they will not open and the clamping device cannot be placed about the gas main pipe 28 when the device is lowered, and this example incorporates a means to overcome this problem.

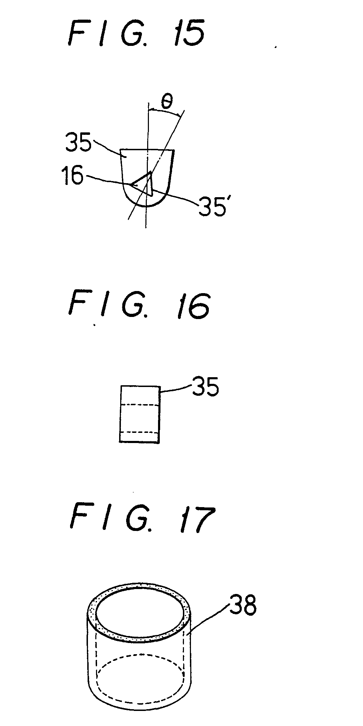

This means comprises elastic member 35 of A-shape made of rubber, as shown in Figure 15, fitted to the support sections 15 of main body 11 and provided with triangular holes 35. The rotary shafts 16 of arms 17 are of a triangular shape to be received within the holes 35' of elastic members 35 so as to open the arms 17, when unloaded and as illustrated in Figure 11. The arms 17 have an angle of "theta" with respect to the rotary shafts 16 at all times. As a result, since the arms 17 of the clamping device are in an open state when lowered into the vertical shaft from the ground they can be placed around the gas main pipe 28.

Further, as the arm retainers 18 are loosely connected with the bolts 21, their weight rests on the shoulders 17' of arms 17. The elastic members 35 which receive rotary shafts 16 of arms 17 are inserted and fitted from above into the support sections 15 and there is a possibility of the arms 17 moving upward away from the body 11, to overcome this the arms are retained using the elastic member 38 which is shown in Figure 17.

In addition, the coupling between the rotary shafts 16 and elastic members 35 can be of square shape as well as the triangular shape section shown in the example.

As mentioned above, the clamping device can be fastened to the gas main pipe by using a tool from ground level and also all operations in connecting the coupling to the clamping device and also the drilling operation using a hole saw as example can be done from the ground level. There is thus no need for excavating a large vertical shaft to accommodate a worker.

Consequently, the vertical shaft to be excavated can be small which shortens the time for excavation and the repair left is smaller. The branched pipe connection can be made at almost any location.

This invention also contemplate the provision of a method for effecting the connection of a ranch pipe to a main pipe.

## Claims

1. Apparatus for use in fitting a branch pipe to a main pipe (28) including a clamping device for grasping the main pipe, comprising a body portion (11) having a curved undersurface (12) for seating on a surface of the main pipe, the upper surface of the body having an upstanding threaded boss (13) for connection of a branch pipe and the curved surface of the body incorporating a sealing member to effect a fluid tight seal against the surface of the main pipe, characterised in that each end of the body is provided with a respective pair of clamping arms (17), each pivotally mounted on the body to engage around, embrace, and grasp the main pipe from opposed sides so as to secure the body (11) thereto, each pair of arms (17) being engaged by operating means including an operating member (18) and means 21 to force the operating member 18 down towards the body so as to cause the arms (17) to close and grip the main pipe.

2. Apparatus according to Claim 1, characterised in that each arm has a shoulder (17') contacted by an end (19) of a respective retaining bar (18) which constitutes said operating member attached to the body by means of a bolt (20), said bolt being tightenable to force the bar towards the body and thus to cause the arms to be pivoted into firm engagement with the main pipe.

3. Apparatus according to Claim 1 or 2, characterised in that each arm includes a shaft (16) to engage lugs on the body to form the pivot about which the arm may rotate, abutment shoulders (17') on each arm (17) associated with retaining bar (18) being positioned outwardly of the pivot axis.

4. Apparatus according to any preceding Claim, wherein resilient members (35) are fitted to the pivot shafts (16) of the arms in order to provide bias about the rotary shafts to maintain the arms (17) in an open condition when unloaded.

5. Apparatus according to Claim 4 wherein the resilient members (35) are located between the rotary pivot shafts (16) and the retainer bars (18) to prevent the pivot shafts from disengaging from the pivot shafts from disengaging from supports on the body the resilient members pushing the arm retainer bars away from the arms in order to keep the weight of said retainer bars from acting on the arms.

6. Apparatus according to any preceding Claim further including a rod member (24) which can be selectively engaged with either the boss (13) of the body, so as to locate and position the body on the main pipe, or with a branch pipe fitting (29) so as to position and engage the branch pipe fitting with the boss on the body and optionally with a plug member (27) to engage the plug with an aperture on top of the branch fitting so as to close such aperture.

7. Apparatus according to Claim 6, wherein a cutting device (36) is provided, which may be lowered and positioned using said rod (24).

8. A method of fitting a branch pipe to a main pipe using apparatus according to any preceding Claim, characterised in that the method comprises the steps of excavating a shaft to expose a portion of the main pipe (28), thereafter fitting a rod member (24) to the clamping device body (10) and inserting said body down the shaft to position it above the main pipe with the clamping arms (17) located to embrace the main pipe, tightening operating members (18) to cause the arms (17) to firmly grip the main pipe, so as to secure the body on an upper surface of the main pipe, thereafter removing the rod member (24), securing a branch pipe fitting (29) to the end of said rod member and attaching the branch fitting to the boss (13) of the body, effecting a drilling operation on the main pipe through an aperture provided in the branch pipe fitting, and thereafter withdrawing the drilling apparatus (36), closing off the top of the branch fitting and subsequently back-filling the shaft.

**Patentansprüche**

1. Vorrichtung für das Befestigen eines Abzweigrohres an einem Hauptrohr (28) mit einer das Hauptrohr umgreifenden Klemmvorrichtung, bestehend aus einem Grundkörperteil (11) mit einer unteren gekrümmten Fläche (12) für das Aufsitzen auf einer Fläche des Hauptrohres und einer oberen Fläche mit einem ein Gewinde aufweisenden aufrecht stehenden Vorsprung (13) zwecks Aufnahme des Abzweigrohres, wobei die gekrümmte Fläche des Grundkörperteils ein Dichtungselement trägt zwecks Herstellung einer fluiddichten Abdichtung gegenüber der Fläche des Hauptrohres, dadurch gekennzeichnet, daß jedem Ende des Grundkörperteils ein Paar einander entsprechender Klemmarme (17) zugeordnet ist, von denen jedes am Grundkörperteil verschwenkbar derart angeordnet ist, daß diese am Hauptrohr anliegend dieses von einander gegenüberliegenden Seiten ergreifend umfassen zwecks Befestigung des Grundkörperteils (11) auf dem Hauptrohr, und daß jedes Paar der Klemmarme (17) mit Betätigungselementen in Wirkverbindung steht, die jeweils ein Wirkglied (18) und Mittel (21) für das Abwärtsbewegen des Wirkgliedes umfassen, um beim Abwärtsbewegen der Wirkglieder (18) die Klemmarme (17) in ihre das Hauptrohr umgreifende Klemmstellung zu bewegen.

2. Vorrichtung nach Anspruch 1, dadurch gekennzeichnet, daß die Betätigungselemente Halteklammern (18) umfassen, die mit ihren Enden (19) auf entsprechenden Schultern (17') der Klemmarme (17) aufliegen und jeweils über einen Spannbolzen (20) mit dem Grundkörperteil (11) verbunden sind, über welche die Halteklammer gegen das Grundkörperteil bewegbar und damit die Klemmarme in ihre am Hauptrohr fest anliegende Stellung schwenkbar sind.

3. Vorrichtung nach dem Anspruch 1 oder 2, dadurch gekennzeichnet, daß jedem Klemmarm als Schwenkachse ein Schwenkstab (16) zugeordnet ist, daß die Schwenkstäbe (16) an Ansätzen am Grundkörperteil (11) angreifen, und daß jeder Klemmarm außerhalb der Schwenkachse liegende Anschlagschultern (17') aufweist, denen die jeweiligen Halteklammern zugeordnet sind.

4. Vorrichtung nach einem der vorhergehenden Ansprüche, dadurch gekennzeichnet, daß den Schwenkstäben (16) zwecks deren Vorspannung elastische Elemente (35) zugeordnet sind, die die Klemmarme (17) im unbelasteten Zustand in der Offenstellung halten.

5. Vorrichtung nach Anspruch 4, dadurch gekennzeichnet, daß die elastischen Elemente (35) zwischen den Schwenkstäben (16) und den Halteklammern (18) derart angeordnet sind, daß zwecks Verhinderung eines in Eingriffsbringens mit dem Grundkörperteil die elastischen Glieder die Halteklammern von den Klemmarmen wegdrücken, so daß das Gewicht der Halteklammern keine Wirkung auf die Klemmarme ausüben kann.

6. Vorrichtung nach einem der vorhergehenden Ansprüche, dadurch gekennzeichnet, daß ein stabförmiges Betätigungselement (24) vorgesehen ist, das wahlweise entweder mit dem Vorsprung (13) des Grundkörperteils zwecks seiner Ausrichtung auf dem Hauptrohr (1) oder mit der Abzweigrohr-Armatur (29) zwecks Ausrichtung und in Eingriff bringen mit dem Vorsprung des Grundkörperteils oder mit einem Verschlußglied (27) zwecks dessen Einführung in die Öffnung am oberen Ende der Abzweigrohr-Armatur zu dessen Verschluß in Verbindung bringbar ist.

7. Vorrichtung nach Anspruch 6, dadurch gekennzeichnet, daß eine mittels des stabförmigen Betätigungselementes (24) absenk- und positionierbare Schneidvorrichtung (36) vorgesehen ist.

8. Verfahren zum Verbinden eines Abzweigrohres mit einem Hauptrohr unter Verwendung einer Vorrichtung gemäß den Ansprüchen 1—7, gekennzeichnet durch folgende Verfahrensschritte:

— Ausheben eines Schachtes zwecks Freilegens eines Bereiches des Hauptrohres (28),

— Verbinden eines stabförmigen Betätigungselementes (24) mit dem Grundkörperteil (11) der Klemmvorrichtung und Einführen des Grundkörperteiles in den Schacht zwecks seiner Positionierung über dem Hauptrohr und Ausrichtung der Klemmarme für das Umgreifen des Hauptrohres,

— Spannen der Halteklammern (18) bis die Klemmarme (17) das Hauptrohr fest umgreifen, um das Grundkörperteil auf einer oberen Fläche des Hauptrohres zu befestigen,

— Herausnehmen des stabförmigen Betätigungselementes (24), Befestigen einer Abzweigrohr-Armatur (29) am Ende des stabförmigen Betätigungselementes und Aufsetzen der Armatur auf dem Vorsprung (13) des Grundkörpers,

— Ausführen eines Bohrvorganges auf dem Hauptrohr durch eine Öffnung der Abzweigrohr-Armatur und

— Herausdrehen des Bohrgerätes (36), Verschließen des oberen Endes der Abzweigrohr-Armatur sowie Wiederauffüllen des Schachtes.

## Revendications

1. Appareil destiné à être utilisé pour le montage d'une tuyauterie en dérivation sur une tuyauterie principale (28), comprenant un dispositif de serrage destiné à s'accrocher à la tuyauterie principale et comportant une partie de corps (11) ayant une face inférieure courbe (12) destinée à être en appui sur une surface de la tuyauterie principale, la surface supérieure du corps ayant une saillie taraudée (13) destinée à être raccordée à une tuyauterie en dérivation, la surface courbe du corps ayant un organe d'étanchéité destiné à former un joint étanche contre la surface de la tuyauterie principale, caractérisé en ce que chaque extrémité du corps a une paire respective de bras de serrage (17), articulé chacun sur le corps afin que les bras entourent la tuyauterie principale, s'y accrochent et soient à son contact, sur des côtés opposés, afin que le corps (11) y soit fixé, chaque paire de bras (17) coopérant avec un dispositif de manoeuvre comprenant un organe de manoeuvre (18) et un dispositif (21) destiné à repousser l'organe de manoeuvre (18) vers le corps, afin que les bras (17) se ferment et serrent la tuyauterie principale.

2. Appareil selon la revendication 1, caractérisé en ce que chaque bras a un épaulement (17') qui est au contact d'une extrémité (19) d'une barre respective de retenue (18) qui constitue l'organe de manoeuvre fixé au corps à l'aide d'un boulon (20), le boulon pouvant être serré afin qu'il repousse la barre vers le corps et provoque ainsi le pivotement des bras en coopération intime avec la tuyauterie principale.

3. Appareil selon la revendication 1 ou 2, caractérisé en ce que chaque bras a un arbre (16) destiné à être au contact de pattes placées sur le corps de manière qu'elles forment le pivot autour duquel le bras peut tourner, des épaulements (17') de butée de chaque bras (17) associés à la barre de retenue (18) étant disposés vers l'extérieur par rapport à l'axe de pivotement.

4. Appareil selon l'une quelconque des revendications précédentes, dans lequel les organes élastiques (35) sont montés sur les arbres de pivotement (16) des bras de manière qu'ils assurent le rappel autour des arbres rotatifs afin que les bras (17) restent en position d'ouverture lorsqu'ils sont déchargés.

5. Appareil selon la revendication 4, dans lequel les organes élastiques (35) sont placés entre les arbres rotatifs de pivotement (16) et les barres de retenue (18) afin que les arbres de pivotement ne puissent pas se séparer des supports placés sur le corps, les organes élastiques repoussant les barres de retenue des bras à distance des bras afin que le poids des barres de retenue ne puisse pas agir sur les bras.

6. Appareil selon l'une quelconque des revendications précédentes, comprenant en outre une tige (24) qui peut être mise sélectivement au contact soit de la saillie (13), afin que le corps soit positionné et localisé sur la tuyauterie principale, soit d'un embout (29) de tuyauterie en dérivation afin que l'embout de tuyauterie en dérivation soit positionné et mis au contact de la saillie du corps, et éventuellement d'un bouchon (27) de manière qu'elle mette le bouchon en coopération avec une overture formée à la partie supérieure de l'embout monté en dérivation afin que cette ouverture soit fermée.

7. Appareil selon la revendication 6, dans lequel un dispositif de coupe (36) est disposé, et peut être abaissé et positionné à l'aide de la tige (24).

8. Procédé de montage d'une tuyauterie en dérivation sur une tuyauterie principale à l'aide d'un appareil selon l'une quelconque des revendications précédentes, caractérisé en ce que le procédé comprend les étapes de creusement d'une excavation afin qu'une partie de la tuyauterie principale (28) soit exposée, puis de disposition d'une tige (24) sur le corps (10) du dispositif de serrage et d'introduction du corps dans l'excavation afin qu'il soit placé sur la tuyauterie principale, les bras de serrage (17) étant disposés afin qu'ils entourent la tuyauterie principale, de serrage des organes de manoeuvre (18) de manière que les bras (17) serrent fermement la tuyauterie principale et fixent le corps à la surface supérieure de la tuyauterie principale, puis de retrait de la tige (24), de fixation d'un embout (29) de tuyauterie monté en dérivation sur l'extrémité de la tige et de fixation de l'embout sur la saillie (13) du corps, l'exécution d'une opération de perçage sur la tuyauterie principale, par l'ouverture formée dans l'embout de la tuyauterie montée en dérivation, puis d'extraction de l'appareil de perçage (36), de fermeture de la partie supérieure de l'embout de dérivation et de remplissage de l'excavation.

FIG. 1

FIG. 2

## F I G. 3

## F I G. 4

# F I G. 5

# F I G.  6

# F I G. 7

# F I G. 8

# F I G. 9

23

24

25

22

26

27

# F I G. 10

34

32

31

33

29

30

F I G.  11

F I G.  12

## FIG. 13

## FIG. 14

# F I G. 15

# F I G. 16

# F I G. 17